# EUROPEAN PATENT SPECIFICATION

(11) **EP 2 217 103 B1**
(45) Date of publication and mention of the grant of the patent: **30.11.2011**
(21) Application number: 08838559.6
(22) Date of filing: 10.10.2008
(51) Int. Cl.: A41D 13/018, A41D 13/05

(54) **PERSONAL PROTECTION DEVICE WITH INFLATABLE BAG AND GARMENT INCLUDING SUCH A DEVICE**
KÖRPERSCHUTZVORRICHTUNG MIT AUFBLASBARER TASCHE UND KLEIDUNGSSTÜCK MIT EINER SOLCHEN VORRICHTUNG
DISPOSITIF DE PROTECTION PERSONNEL AVEC SAC GONFLABLE ET VÊTEMENT COMPRENANT UN TEL DISPOSITIF

(30) Priority: 10.10.2007 IT RM20070536
(43) Date of publication of application: 18.08.2010
(73) Proprietor: Dainese S.p.A., 36060 Molvena VI (IT)
(72) Inventor: PRETTO, Paolo, I-36060 Molvena (vi) (IT)
(74) Representative: Manfrin, Marta
(86) International application number: PCT/IB2008/054177
(87) International publication number: WO 2009/047733

(56) References cited:
- EP-A- 0 043 990
- EP-A- 1 323 359
- WO-A-2006/095440
- FR-A- 2 802 778
- GB-A- 2 345 031
- JP-A- 2004 162 224
- US-A- 3 921 944

## Description

The present disclosure refers to a personal protection device with inflatable bag of the type provided in a garment apt to protect from impacts and/or falls a passenger or driver of a motor vehicle, or in a sports and/or work activity.

In the motorbiking field, drivers' falls and impacts against obstacles (or against the motorbike itself) are, for obvious reasons, particularly apt to produce serious injuries. Besides of course on-road driving, such a problem is especially felt within the scope of agonistic competitions.

In an attempt at solving said relevant problems, in the last decades dedicated systems have been developed to reduce just the injuries and effects from falls on the driver. Such systems can typically be automatically activated at falling and consist, e.g., in air bags housed in professional suits or similar garments.

For the purpose, various technical solutions and air bag shapes are available, which are intended for protecting user's crucial body parts and joints. More specifically, it is provided that one or more inflatable bags be housed folded up inside the garment containing them, said bags being inflated following activation of the inflating device upon receiving the activation input signal, which may come from the garment itself or from the vehicle on which the user travels.

For the above purpose, e.g., systems for identifying a fall event are known, said systems being based on the processing of signals produced by suitably positioned accelerometer sensors; therefore, the use of one of said systems allows an activation of the inflating device before the driver touches ground and/or violently impacts on the motorbike.

On the other hand, solutions proposed to date provide for the air bag to inflate covering the concerned body zone, leaving however other zones uncovered. In particular, there are some constructive solutions that do not provide an effective protection of the cervical zone, as the air bag is housed inside a garment portion that hardly reaches the cervical zone.

Hence, the present disclosure stems from the technical problem of providing a personal protection device with inflatable bag and a garment including such device allowing to meet said need, and/or at least exhibiting further advantages.

A protection device according to the preamble of claim 1 is known from EP0043990.

Such a problem is solved by a protection device for the personal protection of a user as defined in claim 1.

Secondary features of the present disclosure are defined in the corresponding dependent claims.

The subject of the present disclosure provides some relevant advantages.

The main advantage lies in that, according to the device of the disclosure, the air bag has a shape and configuration such that, once developed, it provides an optimal protection both of the cervical zone and of the trunk-thoracic portion of the user, and remaining housed in the garment when non-operative.

Another advantage lies in that, according to the configuration of the protection device of the present disclosure, even subsequently to the use thereof, a remarkable freedom of motion of the user's upper limbs is allowed, increasing the convenience of use of the device.

A further advantage of the device of the present disclosure lies in that the same provides excellent protection of the spinal zone as well as the thoracic one, the cervical one, and the user's sides.

Another advantage of the present disclosure lies in that it is provided a garment housing the present device in an ergonomic, practical manner, as well as compact, easy to manufacture and therefore of reasonable cost.

Other advantages, features and operation steps of the present disclosure will be made apparent in the following detailed description of a preferred embodiment thereof, given by way of example and not for limitative purposes. However, it is evident how each embodiment could have one or more of the advantages listed above; in any case, it is not required that each embodiment concomitantly entail all of the advantages listed.

Reference will be made to the figures of the annexed drawings, wherein:
- Figure 1 shows a partially sectional perspective view of a protection device according to the present disclosure, in an extended and non-operative condition thereof;
- Figure 1A shows an enlarged detail 1a of the protection device of Figure 1;
- Figure 1B shows a sectional view, along line A-A, of the detail Ia of Figure 1A;
- Figure 1C shows a sectional view, along line A-A, of the detail Ia of Figure 1A in an inflated operative condition;
- Figure 2 shows a perspective view of the protection device of Figure 1 in a second condition thereof;
- Figure 3 shows a perspective view of a garment including the protection device of Figure 1;
- Figure 3A shows an enlarged detail IIIa of the garment of Figure 3;
- Figure 4A shows a perspective view from a front side of the protection device of Figure 1 in an operative condition thereof;
- Figure 4B shows a perspective view from a rear side of the protection device of Figure 1 in an operative condition thereof; and
- Figure 4C shows a perspective view from a side of the protection device of Figure 1 in an operative condition thereof.

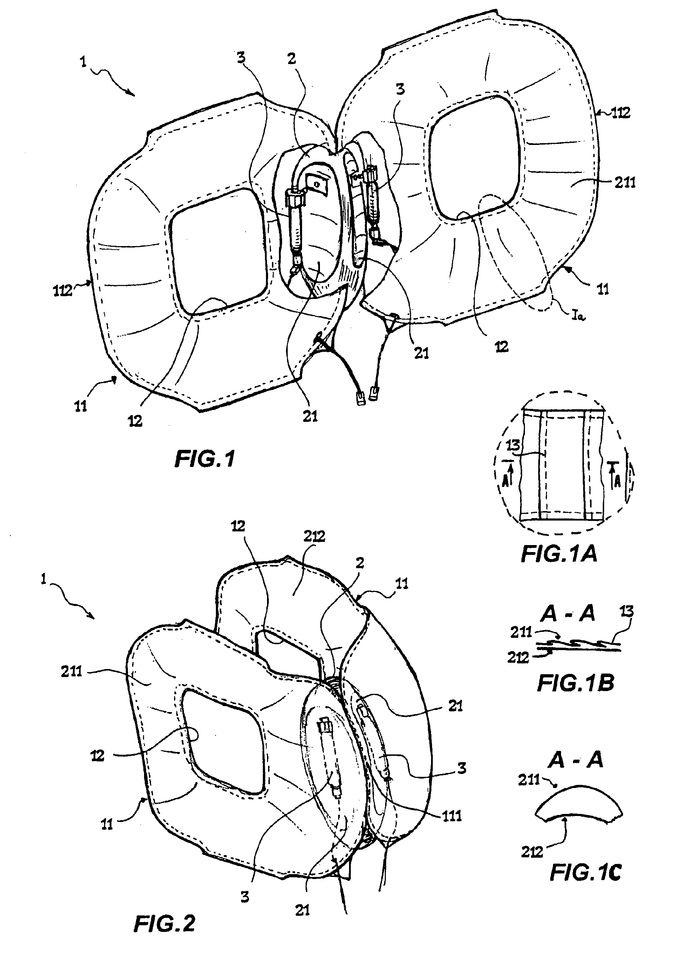

Referring now to Figure 1, a protection device according to the present disclosure is there shown, denoted by reference number 1.

In the example it is provided a protection device 1 comprising two inflatable bags 11, preferably each of annular shape. Each bag 11 is connected, at a first end 111 thereof and in a fixed manner, with a support structure 2.

Within the scope of the present disclosure, the bag 11 is such as to be placed at the cervical portion, the thoracic portion and the sides of a user's body. Preferably, such a configuration is obtained by a bag having the abovementioned annular shape. Alternatively, the inflatable bag has a substantially "C"- or "U"-like shape, or a similar shape that could be placed about each shoulder of the user.

In the example, the support structure 2 is interposed between the two inflatable bags 11 and fastened to a section of each bag 11.

In other words, the support structure 2 forms a connection hinge between two inflatable bags 11, each bag being intended for the protection of one half, right and left, of the user's body trunk.

Such a support structure 2 could e.g. be a rigid structure for spinal protection, having a typical elongated and ovalized shape apt to provide the required cover for a user's spinal region.

Therefore, the support structure 2 is apt to be placed on a median sagittal plane of a user's body.

Moreover, again in the support structure 2 two regions 21 are obtained, each apt to house an inflating device 3 of the respective inflatable bag 11 to which it is associated.

Moreover, each bag 11 has a central region 12, lying at an internal annular side of the bag 11, apt to house in a thorough manner the user's upper limb (better illustrated hereinafter).

In practice, it is obtained a device comprising two opposed bags 11, each intended to be associated to a user's upper limb, and in which the two bags 11 are joined at the support structure 2.

As it will be better evident hereinafter, the configuration of the two inflatable bags 11 is such that in the operative condition they provide an active protection at the cervical region, as well as at the thoracic region, and at the user's sides.

More specifically, and as it is shown in Figures 1A and 1B, the surface 211 of each bag 11, facing outward when the bag is worn on by the user, has a surface extension greater than the inward-facing surface 212; in fact, when the bag 11 is not in an operative condition (i.e., when the bag is deflated), such a surface 211 comprises a plurality of overlapping flaps 13 obtained by means of folds in the radial direction. This is obtained by providing for the outward-facing surface 211 of the bag 11 to comprise a greater amount of material with respect to the inward-facing surface 212, e.g. by using a sheet of material having greater length and/or surface extension. At the manufacturing stage of the bag 11, in which the outer surface sheet 211 is associated to the inner surface sheet 212, the outer surface sheet 211 is folded so as to obtain said plurality of overlapping flaps 13.

In particular, the overlapping flaps 13 are preferably manufactured in the portions of bag 11 which are housed at the user's shoulders and sides, though they could be provided on the entire development of the bag 11 itself.

Moreover, it should be stressed that according to the embodiment illustrated herein, the protection device 1 comprises two inflatable bags 11 pneumatically independent and each associated to a respective inflating device 3. To those skilled in the art it will be evident that, according to an alternative embodiment of the protection device of the present disclosure, said protection device 1 may comprise two pneumatically connected inflatable bags 11, and, as well, the inflating means 3 may be a single inflating device 3, rather than a pair of inflating devices 3.

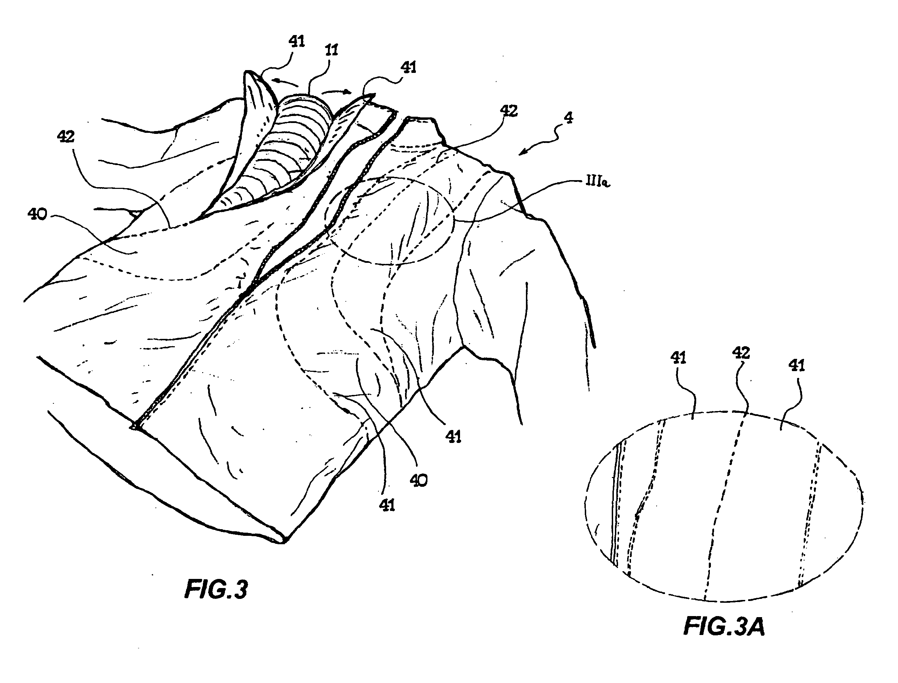

Specifically referring now to Figures 3 and 3A, it is illustrated there the configuration of the personal protection device when it is arranged in a garment 4 and it is in a non-operative condition, i.e. folded up therein.

As it is evident in the figures, according to the present disclosure the garment 4 has a pair of regions 40, each preferably substantially annular, which houses a respective inflatable bag 11.

Each region 40 is obtained at the upper limbs and develops around the sides and the thoracic zone to connect topwise to the other region 40 at the cervical region, and rearwise at the spinal region.

In practice, it is obtained a garment having a portion intended to receive a protection device 10 and comprising two front sections having a substantially "L"-like shape, oriented in opposite directions, going from the user's shoulders to the user's sides at the user's chest, and two corresponding rear sections having a substantially "L"-like shape, oriented in opposite directions, going from the user's shoulders to the user's sides at the user's back. Such a portion allows to obtain a protection at a cervical zone and a protection at the trunk, as well as of the sides.

Each annular region 40 of the garment 4 is formed by two panels 41 joined by means of preferential-tearing seams 42, which yield in case of actuation/activation of the protection device 1.

Moreover, the region 40 is jointly associated to at least one second end 112 of the bag 11 housed therein along all of its extension, in a manner such that during operation of the bag 11 the same does not fully come out from its seat 40. In other words, the bag 11 is connected at its first end 111 with the support structure 2 and at its second end 112 with a portion of said garment 4. As an alternative, the second end 112 of one bag 11 may be directly connected with the second end 112 of the other bag 11.

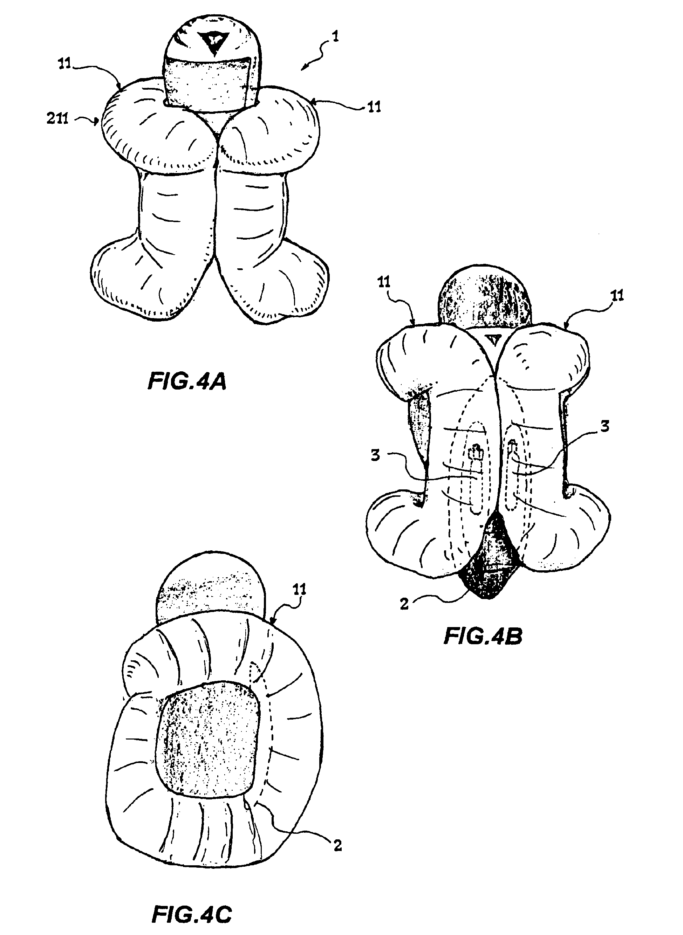

Referring now to Figures 4A to 4C, the same schematically show the protection device 1 in an operative condition.

As it is better evident in the figures, in the operative condition, i.e. in an inflated condition, each bag 11 is arranged around the user's ribcage and cervical region, leaving upper limb regions substantially free from constraints. In particular, each bag 11 is such as to form, right and left, a first half-circle about a user's neck, a first rear vertical section at the spine, a second front vertical section at the chest, and a second half-circle at the sides.

Therefore, it is evident how in the operative condition the protection device 1 provides an effective active protection both at the user's cervical region and at the user's thoracic region, concomitantly leaving the user free from constraints at his/her upper limbs.

In particular, thanks to the presence of said overlapping flaps 13, the bag 11, once inflated, develops preferably outwards, assuming naturally a curved and rounded shape, in particular at the user's shoulders and sides, thereby better conforming to the user's body and ensuring him/her greater ease and less stresses during the inflation. In fact, during the inflation the flaps 13 unfold and thereby the outward-facing surface 211 has an extension greater than the inward-facing surface 212; accordingly, the bag 11 curves, so that the outer surface 211 curves, extending outwards, with respect to the inner surface 212.

The inflating means 3 may be activated, with an entailed inflation of the inflatable bags 11, by means of a fall prediction system allowing a prompt identification of a fall event and a reliable prediction thereof. Said fall prediction system may, e.g., comprise accelerometer sensors joined to a motorbike or a driver, and a unit for processing signals produced by said accelerometer sensors, allowing to identify the fall event and consequently activate the inflating means 3 before the driver touches ground and/or violently impacts on the motorbike.

The subject of the present disclosure has hereto been described with reference to preferred embodiments thereof. It is understood that other embodiments might exist, comprised within the scope of protection of the claims hereinafter.

## Claims

1. A protection device (1) for the personal protection of a user, apt to be contained in a garment (4) wearable on by said user, the inflatable device (1) comprising at least one inflatable bag (11), a support structure (2) apt to be arranged at a user's spinal portion and connected with said inflatable bag (11), and means (3) for inflating said at least one inflatable bag (11), **characterized in that** said at least one inflatable bag (11) has an operative configuration apt to provide an active protection both at a user's cervical region and at a thoracic region, as well as at user's sides, said protection device (1) comprising a pair of bags (11) of annular shape, said bags being pneumatically connected or pneumatically independent, and arranged side-by-side at said support structure (2), each bag (11) having a region (12) apt to house a user's upper limb.

2. The protection device (1) according to claim 1, wherein said at least one inflatable bag (11) is connected at a first end (111) thereof with said support structure (2), and at a second end (112) thereof with a portion of said garment (4).

3. The protection device (1) according to any one of the preceding claims, wherein said inflating means (3) are housed in said support structure (2).

4. The protection device (1) according to the preceding claim, wherein said inflating means (3) comprises two inflating devices (3), each of which being associated to a respective inflatable bag (11).

5. The protection device (1) according to any one of the preceding claims, wherein said support structure (2) has a pair of regions (21), each of which being intended for housing said inflating means (3).

6. The protection device (1) according to the preceding claim, wherein said inflating means (3) comprises two inflating devices (3), each associated to a respective inflatable bag (11).

7. The protection device (1) according to any one of the preceding claims, wherein said support structure (2) is a rigid structure for spinal protection.

8. The protection device (1) according to any one of the preceding claims, wherein said inflatable bag (11) has a first outward-facing surface (211) having a surface extension greater than the surface extension of an inward-facing second surface (212), the arrangement being such that, when said bag (11) is not in an operative condition, said outward-facing surface has overlapping flaps (13) with folds in the radial direction, said flaps (13) being apt to allow a preferential extension of the bag outwards and with respect to the second surface (212) when the bag (11) is in the operative condition.

9. The protection device (1) according to any one of the preceding claims, wherein said inflating means (3) can be activated by means of a fall prediction system.

10. A garment (4) including a protection device (1) for the personal protection of a user according to any one of the preceding claims.

## Patentansprüche

1. Schutzvorrichtung (1) für den persönlichen Schutz eines Benutzers, geeignet für die Aufnahme in einem Kleidungsstück (4), das von dem Benutzer getragen werden kann, wobei die aufblasbare Vorrichtung (1) wenigstens einen aufblasbaren Beutel (11), eine Trägerstruktur (2), die am Rückenbereich eines Benutzers angeordnet und mit dem aufblasbaren Beutel (11) verbunden werden kann, und Mittel (3) zum Auf blasen des wenigstens einen aufblasbaren Beutels (11) umfasst, **dadurch gekennzeichnet, dass** wenigstens ein aufblasbarer Beutel (11) eine solche operative Konfiguration hat, dass dieser einen aktiven Schutz sowohl einer Halsregion und einer Brustregion eines Benutzers als auch an Seiten eines Benutzers bereitstellt, wobei die Schutzvorrichtung (1) ein Paar Beutel (11) in Ringform umfasst, wobei die Beutel pneumatisch verbunden oder pneumatisch unabhängig sind und seitenweise an der Trägerstruktur (2) angeordnet sind, wobei jeder Beutel (11) eine Region (12) hat, welche eine obere Extremität des Benutzers aufnehmen kann.

2. Schutzvorrichtung (1) nach Anspruch 1, in welcher der wenigstens eine aufblasbare Beutel (11) an einem ersten Ende (111) desselben mit der Trägerstruktur (2) und an einem zweiten Ende (112) desselben mit einem Bereich des Kleidungsstücks (4) verbunden ist.

3. Schutzvorrichtung (1) nach einem der vorhergehenden Ansprüche, in welcher das Aufblasmittel (3) in der Trägerstruktur (2) aufgenommen ist.

4. Schutzvorrichtung (1) nach dem vorhergehenden Anspruch, in welcher das Auf blasmittel (3) zwei Aufblaseinrichtungen (3) umfasst, von denen jede mit einem jeweiligen aufblasbaren Beutel (11) verbunden ist.

5. Schutzvorrichtung (1) nach einem der vorhergehenden Ansprüche, in welcher die Trägerstruktur (2) ein Paar Regionen (1) hat, wobei jede derselben zum Aufnehmen des Aufblasmittels (3) vorgesehen ist.

6. Schutzvorrichtung (1) nach dem vorhergehenden Anspruch, in welcher das Aufblasmittel (3) zwei Aufblaseinrichtungen (3) umfasst, die jeweils mit einem jeweiligen aufblasbaren Beutel (11) verbunden sind.

7. Schutzvorrichtung (1) nach einem der vorhergehenden Ansprüche, in welcher die Trägerstruktur (2) eine steife Struktur für den spinalen Schutz ist.

8. Schutzvorrichtung (1) nach einem der vorhergehenden Ansprüche, in welcher der aufblasbare Beutel (11) eine erste nach außen gerichtete Oberfläche (211) hat, die eine Oberflächenabmessung hat, welche größer ist als die Oberflächenabmessung einer nach innen gerichteten zweiten Oberfläche (212), wobei die Anordnung derart ist, dass, wenn der Beutel (11) sich nicht in einem Betriebszustand befindet, die nach außen gerichteten Oberflächen überlappende Klappen (13) mit Falten in radialer Richtung hat, wobei die Klappen (13) so ausgebildet sind, dass sie eine bevorzugte Erstreckung des Beutels nach außen und in Bezug zu der zweiten Oberfläche (212) erlauben, wenn der Beutel (11) im Betriebszustand ist.

9. Schutzvorrichtung (1) nach einem der vorhergehenden Ansprüche, in welcher das aufblasbare Mittel (3) mithilfe eines Sturz-Vorhersagesystems aktiviert werden kann.

10. Kleidungsstück (4) mit einer Schutzvorrichtung (1) für den persönlichen Schutz eines Benutzers gemäß einem der vorhergehenden Ansprüche.

## Revendications

1. Dispositif de protection (1) pour la protection personnelle d'un utilisateur, le dispositif de protection étant apte à être contenu à l'intérieur d'un vêtement (4) pouvant être porté par ledit utilisateur, le dispositif gonflable (1) comprenant au moins une poche gonflable (11), une structure de support (2) qui est apte à être placée au niveau d'une partie de colonne vertébrale de l'utilisateur et qui est apte à être raccordée à ladite poche gonflable (11), et des moyens (3) servant à gonfler ladite au moins une poche gonflable (11), **caractérisé en ce que** ladite au moins une poche gonflable (11) a une configuration opérationnelle qui est apte à garantir une protection active tant au niveau de la région cervicale d'un utilisateur qu'au niveau d'une région thoracique et au niveau des côtés d'un utilisateur, ledit dispositif de protection (1) comprenant une paire de poches (11) de forme annulaire, lesdites poches étant raccordées pneumatiquement ou étant indépendantes pneumatiquement, et étant placées côte à côte au niveau de ladite structure de support (2), chaque poche (11 ) comportant une région (12) qui est apte à recevoir un membre supérieur d'un utilisateur.

2. Dispositif de protection (1) selon la revendication 1, dans lequel ladite au moins une poche gonflable (11) est raccordée, du côté d'une première de ses extrémités (111), à ladite structure de support (2) et, du côté d'une seconde de ses extrémités (112), à une partie dudit vêtement (4).

3. Dispositif de protection (1) selon l'une quelconque des revendications précédentes, dans lequel lesdits moyens de gonflage (3) sont logés à l'intérieur de ladite structure de support (2).

4. Dispositif de protection (1) selon la revendication précédente, dans lequel lesdits moyens de gonflage (3) comprennent deux dispositifs de gonflage (3) qui sont associés chacun à une poche gonflable respective (11).

5. Dispositif de protection (1) selon l'une quelconque des revendications précédentes, dans lequel ladite structure de support (2) comporte une paire de régions (21) qui sont prévues chacune pour recevoir lesdits moyens de gonflage (3).

6. Dispositif de protection (1) selon la revendication précédente, dans lequel lesdits moyens de gonflage (3) comprennent deux dispositifs de gonflage (3) qui sont associés chacun à une poche gonflable respective (11).

7. Dispositif de protection (1) selon l'une quelconque des revendications précédentes, dans lequel ladite structure de support (2) est une structure rigide pour la protection de la colonne vertébrale.

8. Dispositif de protection (1) selon l'une quelconque des revendications précédentes, dans lequel ladite poche gonflable (11) comporte une première surface dirigée vers l'extérieur (211) dont un prolongement de surface est plus grande que le prolongement de surface d'une seconde surface dirigée vers l'intérieur (212), la configuration étant telle que, quand ladite poche gonflable (11) n'est pas dans une condition opérationnelle, ladite surface dirigée vers l'extérieur comporte des rabats de recouvrement (13) avec des plis dans la direction radiale, lesdits rabats (13) étant aptes à permettre une extension préférentielle de la poche vers l'extérieur et par rapport à la seconde surface (212) quand la poche (11) est dans la condition opérationnelle.

9. Dispositif de protection (1) selon l'une quelconque des revendications précédentes, dans lequel lesdits moyens de gonflage (3) peuvent être actionnés au moyen d'un système de prédiction de chute.

10. Vêtement (4) contenant un dispositif de protection (1) pour la protection personnelle d'un utilisateur selon l'une quelconque des revendications précédentes.
